Europäisches Patentamt

European Patent Office

Office européen des brevets

(19)

(11) Veröffentlichungsnummer: **0 143 286 B1**

# (12) EUROPÄISCHE PATENTSCHRIFT

(45) Veröffentlichungstag der Patentschrift: **23.12.92**

(21) Anmeldenummer: **84112080.1**

(22) Anmeldetag: **09.10.84**

(51) Int. Cl.⁵: **G02B 6/44**

(54) **Optisches Nachrichtenkabel.**

(30) Priorität: **29.10.83 DE 3339389**

(43) Veröffentlichungstag der Anmeldung:
**05.06.85 Patentblatt 85/23**

(45) Bekanntmachung des Hinweises auf die
Patenterteilung:
**23.12.92 Patentblatt 92/52**

(84) Benannte Vertragsstaaten:
**DE GB SE**

(56) Entgegenhaltungen:
**EP-A- 0 020 036**
**CH-A- 481 505**
**DE-A- 3 112 422**
**FR-A- 2 502 831**

(73) Patentinhaber: **ALCATEL N.V.**
**Strawinskylaan 537 (World Trade Center)**
**NL-1077 XX Amsterdam(NL)**

(84) Benannte Vertragsstaaten:
**GB SE**

(73) Patentinhaber: **Kabelmetal Electro GmbH**
**Kabelkamp 20**
**W-3000 Hannover 1(DE)**

(84) Benannte Vertragsstaaten:
**DE**

(72) Erfinder: **Grögl, Ferdinand**
**Dürrenstrasse 42**
**W-7141 Oberstenfeld(DE)**
Erfinder: **Widler, Hans-Jörg, Dr.**
**Badstrasse 27**
**W-7000 Stuttgart 50(DE)**

(74) Vertreter: **Mende, Eberhard, Dipl.-Ing. et al**
**kabelmetal electro GmbH Kabelkamp 20**
**Postfach 260**
**W-3000 Hannover 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einem optischen Nachrichtenkabel, wie es im Oberbegriff des Anspruches 1 angegeben ist.

Ein derartiges Kabel ist durch die französische Anmeldung 2 502 831 bekannt. Zum Schutz der Kabelseele ist diese von einem zweiteiligen Profil umgeben, dessen gegeneinander gerichteten Kanten profiliert sind, so daß nach dem Herumlegen dieser Profile um die Kabelseele die Profile ineinanderrasten.

Man hat auch bereits um eine Kabelseele mit Lichtwellenleitern, die vor Längs- und Querkräften zu schützen sind, eine Ummantelung so herumgelegt, daß die Kabelseele lose in der Ummantelung geführt ist (DE-OS 31 12 422).

Den glasfaserverstärkten Mantel hat man nach einem speziellen Tränkverfahren hergestellt, wobei zwischen Mantel und Kabelseele ein Zwischenraum entsteht. Außerdem ist die Kabelseele beim Aushärten des Mantels einer hohen thermischen Beanspruchung ausgesetzt. Dies macht eine zusätzliche Wärmeisolation erforderlich.

Die Aufgabe der Erfindung besteht darin, ein Kabel der genannten Art anzugeben, bei dem das Ummanteln einer Kabelseele weitgehend problemlos möglich ist.

Diese Aufgabe wird durch die im Anspruch 1 angegebenen Merkmale gelöst. Die Unteransprüche zeigen vorteilhafte Ausgestaltungen des Erfindungsgegenstandes auf.

Die durch die Erfindung erzielten Vorteile bestehen insbesondere darin, daß durch einfaches Einlegen der Kabelseele in den nach oben offenen ersten Rohrteil und das anschliessende Verschließen mit dem zweiten Rohrteil eine Ummantelung der Kabelseele ohne Erwärmung erfolgt, wobei sichergestellt ist, daß sich die Seele nach der Ummantelung lose im Rohr befindet.

Anhand eines Ausführungsbeispiels wird die Erfindung in Verbindung mit den Zeichnungen nachfolgend näher erläutert. Es zeigt:

Figur 1     den stark vergrößerten Querschnitt eines Kabels mit einem Mantelrohr gemäß der Erfindung

Figur 2     eine Einrichtung zum Einbringen einer Kabelseele in ein Mantelrohr gemäß Figur 1 mit anschließender Extrusion eines Schutzmantels in schematischer Darstellung.

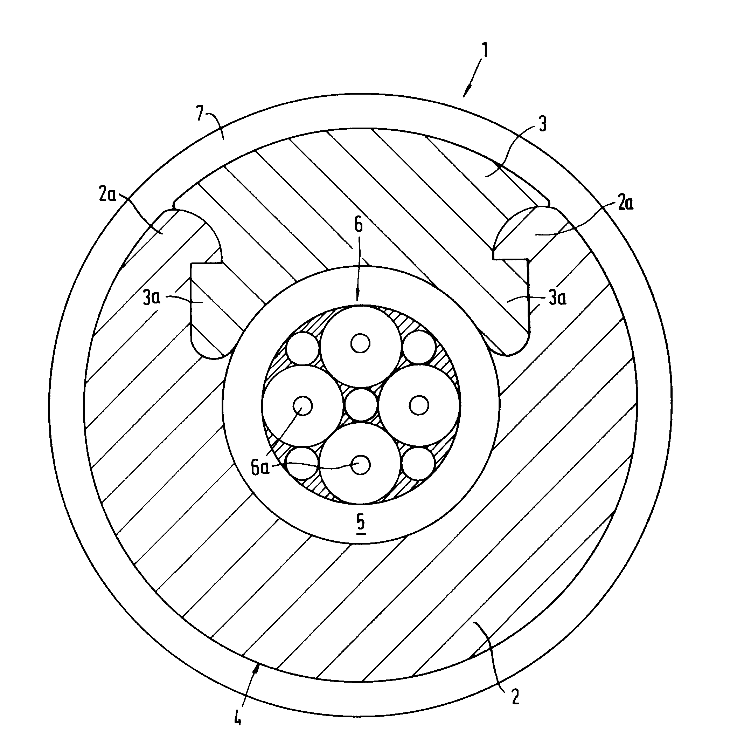

Figur 1 zeigt in einer möglichen Ausführung den prinzipiellen Aufbau eines optischen Kabels 1 in vergrößerter Querschnittsdarstellung.

Die Ummantelung für eine z. B. vier Lichtwellenleiter 6a enthaltende Kabelseele 6 ist ein in Längsrichtung zweigeteiltes Mantelrohr 4 mit einem zentrisch angeordneten Innenraum 5 zur Aufnahme der Kabelseele 6. Das eine Rohrteil 2 ist in Längsrichtung etwa in der Breite des Durchmessers des Innenraumes 5 nach außen offen. Das andere Rohrteil 3 ist so ausgebildet, daß es genau in die Längsöffnung im Teil 2 paßt. Die innere Seite des Rohrteils 3 ist dabei dem Radius des Innenraumes 5 angepaßt. Zur Verriegelung des eingesetzten Rohrteils 3 sind die beiden Teile 2 und 3 entsprechend der Darstellung in Fig. 1 mit sich in Längsrichtung erstreckenden Rastleisten 2a bzw. 3a versehen. Diese sind so ausgebildet, daß der Rohrteil 3 beim Zusammenfügen in dem Rohrteil 2 einschnappt, derart, daß die beiden Rohrteile danach unlösbar miteinander verbunden sind.

Wenn eine erhöhte Festigkeit der Verbindung zwischen den Rohrteilen 2 und 3 gefordert wird, so können die beiden Teile 2 und 3 im Eingriffsbereich zusätzlich miteinander verklebt werden. Ein zum Schluß auf das Rohr 4 aufgebrachter Schutzmantel 7 sorgt mit für eine feste und dauerhafte Verbindung zwischen den beiden Rohrteilen 2 und 3.

Die beiden Rohrteile 2 und 3 werden aus einem glasfaserverstärktem Kunststoff im Strangpreßverfahren hergestellt. Sie stehen in großen Längen auf Vorratstrommeln gewickelt zur weiteren Verarbeitung zur Verfügung.

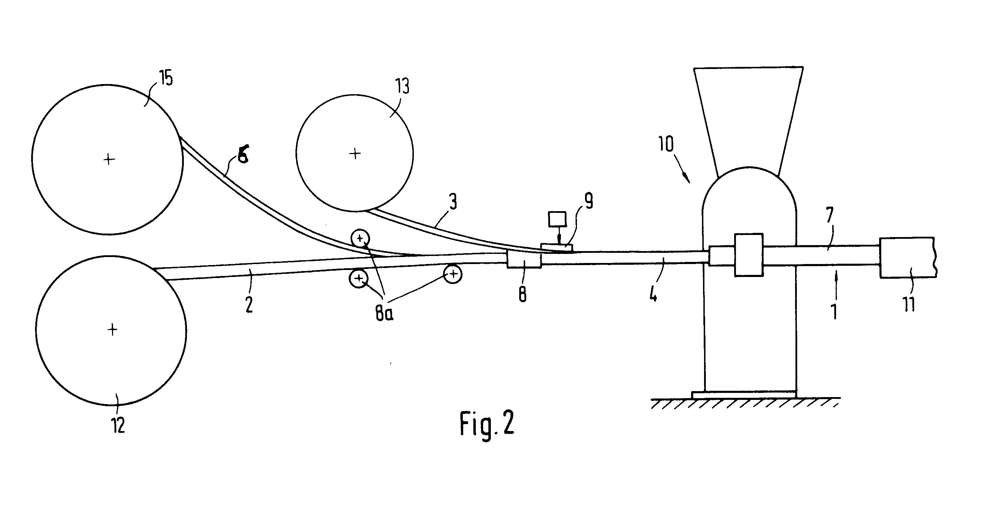

Die zur Verarbeitung der Rohrteile 2 und 3 und zur Fertigstellung des Kabels 1 erforderliche Einrichtung zeigt Fig. 2 in einer Schemadarstellung. Sie besteht aus nicht dargestellten Halterungen für Vorratstrommeln 12, 13 und 15, auf denen die Rohrteile 2 bzw. 3 und die Kabelseele 6 aufgewickelt sind, einer Führungsstation 8 mit Führungsrollen 8a, einer Preßvorrichtung 9, einem Extruder 10 und einer nachgeordneten Kühlvorrichtung 11.

Das Rohrteil 2 gelangt von der Vorratstrommel 12 über die Führungsrollen 8a zur Führungsstation 8. Im Bereich dieses Zuführungsabschnitts wird in das nach oben offene Rohrteil 2 die von der Vorratstrommel 15 abgezogene Kabelseele 6 eingelegt. Im Bereich der Führungsstation 8 wird das von der Vorratstrommel 13 abgezogene Rohrteil 3 zugeführt. Je nach den gegebenen Verhältnissen und den an das Kabel gestellten Forderungen kann in die Führungsstation 8 eine Spreizvorrichtung und/oder eine Auftragsvorrichtung für einen Kleber einbezogen sein. Durch die Preßvorrichtung 9 wird das Rohrteil 3 nach einer eventuellen vorhergegangenen Spreizung des Gegenstücks in die Öffnung des Rohrteil 2 hineingedrückt, mit dem es in der vorbeschriebenen Weise in formschlüssigen, nicht lösbaren Eingriff gelangt. Das somit geschlossene Mantelrohr 4 gelangt anschließend in einen Extruder 10, in dem das Rohr 4 mit einem Schutzmantel 7 aus einem gegen Umwelteinflüsse resistenten Kunststoff umgeben wird. In der anschließenden Kühlvorrichtung 11 wird der Schutzmantel 7 abgekühlt. Das fertige Kabel 1 wird auf eine Liefertrommel aufgewickelt.

Es besteht keine zwingende Notwendigkeit, daß das Mantelrohr 4 einen runden Querschnitt hat. Es sind Anwendungsfälle denkbar, bei denen ein ovaler oder quadratischer Querschnitt von Vorteil ist.

## Patentansprüche

1. Optisches Nachrichtenkabel, bei dem eine, mindestens einen Lichtwellenleiter (6a) enthaltende Kabelseele (6) lose in einer Ummantelung (4) aus glasfaserverstärktem, gehärtetem Kunststoff angeordnet ist, wobei die Ummantelung aus einem in Längsrichtung zweigeteilten Rohr (4) besteht, dessen beide Rohrteile (2,3) unlösbar miteinander verbunden sind, und wobei die Ummantelung (4) ihrerseits von einem Schutzmantel (7) umgeben ist, dadurch gekennzeichnet, daß die beiden Rohrteile (2, 3) über eine Schnappverbindung (2a,3a) in einem unauflösbaren formschlüssigen Eingriff miteinander stehen.

2. Kabel nach Anspruch 1, dadurch gekennzeichnet, daß die Rohrteile (2, 3) im Eingriffbereich miteinander verklebt sind.

3. Kabel nach Anspruch 2 und 3, dadurch gekennzeichnet, daß das Rohr (4) einen nicht kreisförmigen Querschnitt hat.

## Claims

1. Optical communication cable in which a cable core (6) containing one or more optical waveguides (6a) is loosely disposed within a sheathing (4) of glass fibre reinforced plastic material, the sheathing (4) consisting of a tubing (4) being divided into two (2,3) in the longitudinal direction, the parts (2,3) of which are inseparably connected to one another and in which the sheathing (4) is surrounded by a protecting sheath (7), characterized in that the two parts (2,3) of the tubing (4) mesh with one another unseparably and form-closed by a snap connection.

2. Optical cable according to claim 1 characterized in that the parts (2,3) of the tubing (4) are glued with one another in their zone of contact.

3. Optical cable according to claim 1 and 2, characterized in that the tubing (4) has a non-circular cross section.

## Revendications

1. Câble de transmission optique comprenant une âme (6) incluant au moins une fibre optique (6a), disposée de façon lâche dans une gaine (4) en matière plastique durcie renforcée de fibres de verre, ladite gaine étant constituée d'un tube (4) partagé en deux parties dans sa direction longitudinale, les deux parties de tube (2,3) étant liées entre elles de manière non séparable, et ladite gaine (4) étant entourée par une gaine de protection (7), caractérisé en ce que lesdites deux parties de tube (2,3) sont assemblées par un assemblage à encliquetage (2a,3a) assurant un engagement non séparable par coopération de formes.

2. Câble selon la revendication 1, caractérisé en ce que lesdites parties de tube (2,3) sont collées dans la zone d'engagement.

3. Câble selon les revendications 1 et 2, caractérisé en ce que ledit tube (4) présente une section non circulaire.

Fig.1

Fig. 2

EP 0 143 286 B1